# FASCICULE DE BREVET EUROPEEN

(11) **EP 2 418 387 B1**
(45) Date de publication et mention de la délivrance du brevet: **01.04.2015**
(21) Numéro de dépôt: 10172542.2
(22) Date de dépôt: 11.08.2010
(51) Int. Cl.: F04D 29/02, F04D 29/52, F01D 11/12, F04D 29/16

(54) **Virole externe de compresseur de turbomachine axiale**
Gehäusering eines Kompressors eines axialen Turbotriebwerks
Shroud ring of an axial turbomachine compressor

(43) Date de publication de la demande: 15.02.2012
(73) Titulaire: Techspace Aero S.A., 4041 Herstal (Milmort) (BE)
(72) Inventeur: Duchaine, Georges, 4608, Warsage (BE); Philippet, Michel, 4690, Bassenge (BE)
(74) Mandataire: Lecomte, Didier

(56) Documents cités:
- EP-A2- 1 004 750
- EP-A2- 1 108 857
- EP-A2- 2 116 695
- EP-A2- 2 388 441
- GB-A- 2 442 112
- US-A- 5 472 315
- US-A1- 2005 201 860
- US-A1- 2010 111 675

## Description

### Domaine technique

L'invention a trait à une virole externe de turbomachine axiale pourvue d'une couche d'abradable destinée à assurer une étanchéité tournante, plus particulièrement à une virole externe de compresseur de turbomachine axiale. L'invention a trait également à un compresseur de turbomachine axiale pourvue d'une telle virole. L'invention a trait également à un procédé de fabrication d'une telle virole.

II est à noter que l'expression de langue anglaise « abradable » est communément utilisée pour désigner un matériau friable apte à assurer une certaine étanchéité avec une surface mobile par rapport à ce matériau. Ce matériau peut présenter diverses compositions, structures et formes. A titre d'exemple, une virole externe de compresseur de turbomachine axiale, pourvue d'une couche de ce matériau permet d'assurer une étanchéité tournante avec les extrémités des aubes rotoriques dudit compresseur. Cela permet de conserver l'intégrité de l'ensemble et ce malgré les déformations, mêmes légères, inhérentes à la turbomachine, notamment des déformations en élongation des aubes en raison des forces centrifuges. En réduisant au minimum le jeu entre les aubes mobiles et le carter de la veine fluide, on augmente l'efficacité et le rendement du turboréacteur.

L'utilisation de matériau composite notamment à matrice organique est en développement et en croissance notamment pour les compresseurs de turbomachines axiales du type moteur d'avion. L'utilisation de tels matériaux notamment au niveau de virole externe implique de nouvelles contraintes.

### Technique antérieure

Le document de brevet US 2009/0277153 A1 divulgue un stator de moteur du type turbine à gaz, équipé d'une garniture composite supportant une couche de matériau abradable. Cette couche de matériau abradable a pour rôle de garnir la surface interne du carter ou stator du moteur en question en vue de coopérer par friction avec les extrémités d'aubes tournantes. La face interne du carter est garnie d'une couche de matériau composite cellulaire destinée à absorber d'éventuels impacts de glace ou de morceau d'aubes en cas de « fan blade off ». La garniture est habillée d'une couche d'abradable via une paroi intermédiaire. Cette paroi intermédiaire comporte une série de perforations de diamètres supérieurs à 1 mm. Elle est fixée à la garniture composite par collage et est préférentiellement en polyester renforcé de fibres de verre. La couche d'abradable est fixée à la paroi intermédiaire via un adhésif coopérant avec les perforations. Ces perforations ont pour rôle de permettre un dégazage notamment vers les cellules de la garniture composite, et de permettre un accrochage mécanique entre la couche d'abradable et la paroi intermédiaire.

Le document US 2009/0277153A1 propose donc une solution pour la pose d'un abradable sur un support cellulaire. Le champ d'application de cette solution est par conséquent fortement limité.

Le document de brevet US 4, 329, 308 divulgue un anneau métallique avec des bords de manière à présenter une section en « U », le creux de la section étant rempli d'un matériau abradable. Ce matériau abradable est formé par moulage dans l'anneau ou est préformé pour être ensuite déroulé sur l'anneau. L'abradable est ensuite déformé avant cuisson par une roue dentée afin de former des cavités. Tout comme dans l'enseignement précédent, l'abradable est du type polymère préformé. Il est précisé dans ce document que cet anneau peut être inséré dans un carter de stator ou constituer un élément de ce dernier. Le mode de fixation de l'anneau au stator n'est cependant pas précisé.

La solution proposée par cet enseignement impose un mode particulier de fabrication et de mise en place de l'abradable. De plus, la solution proposée n'aborde pas la fixation de l'anneau au carter.

Le document de brevet US 4,867,639 divulgue un abradable comprenant une structure en forme de nid d'abeille métallique et un composant céramique. La structure en forme de nid d'abeille est brasée directement sur la paroi interne du stator ou, alternativement, sur un support rapporté à la paroi du stator. Cet abradable est plus résistant notamment en température que l'abradable polymère des enseignements précédents. Cependant, tout comme pour les enseignements précédents, l'abradable, en raison de sa nature même, est mis en place avant la mise en place du support. De plus le support assez massif est mis en place par emboîtement mécanique sur le carter, ce qui n'est pas compatible avec un carter en matériau composite.

Les documents de brevet US 2010/0111675 A1, US 2005/0201860 A1 et EP 1 004 750 A2 divulguent des turbomachines dont le carter forme une virole métallique pourvue, sur sa surface intérieure, d'une couche d'abradable et, sur sa surface extérieure, d'un anneau de contention en matériau composite.

Au-delà de l'enseignement des documents précédents, on connaît aujourd'hui des abradables performants déposés par projection plasma sur des viroles métalliques notamment en compresseur basse pression. Ces abradables contiennent un constituant métallique impliquant des problèmes de tenue lorsqu'ils sont appliqués directement sur un support composite en raison de la différence importante des coefficients de dilatation entre le métal et le composite et en raison de la fragilité de l'interface.

### Résumé de l'invention

L'invention a pour objet de proposer une virole munie d'un abradable et un procédé de fabrication de virole palliant au moins un des problèmes sus mentionnés. Plus particulièrement, l'invention a pour objet de proposer une virole composite pourvue d'un abradable déposé par projection plasma et un procédé de fabrication de virole simple, performante et permettant de réaliser un compresseur de masse réduite.

L'invention consiste en une virole de turbomachine axiale, comprenant: un élément structurel assurant la rigidité de la turbomachine et formant un support de forme généralement annulaire ou cylindrique avec une surface interne généralement circulaire; un anneau avec une surface interne et une surface externe opposée à ladite surface interne et disposée sur la surface interne dudit support; une couche de matériau abradable disposée sur la surface interne dudit anneau; remarquable en ce que ledit support est en matériau composite à matrice organique; et ledit anneau est en matériau métallique.

Le support et/ou l'anneau peuvent être généralement cylindriques avec toutefois éventuellement une (légère) conicité inhérente à la forme d'un carter de compresseur de turbomachine axiale.

L'anneau peut être fermé, ouvert ou encore être constitué de plusieurs segments, les segments pouvant alors être mis successivement en place sur le support de manière à former un anneau.

Préférentiellement, l'anneau métallique est structuré.

Bien que l'utilisation de matériau composite dans un objectif de réduction de poids soit généralement connue, l'idée d'utiliser un anneau métallique intermédiaire avec des caractéristiques de dilatation thermique adaptées entre la paroi support en composite et la couche d'abradable n'en reste pas moins remarquable. En effet, dans l'enseignement du document US 2009/0277153 A1, la partie structurelle de la virole, à savoir la paroi du carter, reste en matériau métallique. Une couche perforée intermédiaire en composite est utilisée entre l'abradable en composite et une couche intermédiaire cellulaire métallique. Dans l'invention décrite ici, l'utilisation d'un anneau métallique permet de créer une transition moins brutale entre les coefficients de dilatation thermique de la virole composite et du matériau abradable garantissant la tenue mécanique de l'abradable. Il permet ainsi l'application d'un abradable performant par projection plasma. De plus, cet anneau métallique joue également le rôle de couche protectrice du support composite. La présence de matériau métallique compense le manque de ductilité typique de matériau composite et protège la structure composite des sollicitations mécaniques violentes telles que l'érosion ou encore l'action des aubes provoquée par un incident tel qu'une perte d'aube fan. Cette couche protectrice apporte également un avantage pour la réparabilité des pièces. La partie composite de la virole se trouve protégée lorsque l'on vient retirer l'abradable par des procédés connus tels que le sablage ou le jet d'eau.

Selon un premier mode de réalisation de l'invention, l'anneau comprend une série de perforations réparties sur sa surface. Les perforations sont réparties de manière généralement homogène et/ou régulière sur la surface de l'anneau, préférentiellement sur la totalité de la surface de l'anneau. Elles sont généralement circulaires et présentent un diamètre inférieur ou égal à 1 mm, préférentiellement inférieur ou égal à 0.6 mm. Cet anneau peut être constitué de plusieurs secteurs de feuillard métallique. Les perforations permettent non seulement un dégazage de la colle mais également un accrochage mécanique meilleur.

Selon un second mode de réalisation de l'invention, l'anneau est constitué d'un treillis métallique.

Préférentiellement, le matériau métallique de l'anneau est compris parmi les matériaux suivants : acier inoxydable, titane, alliage de fer et nickel, invar (Fe-Ni36%).

Selon un troisième mode de réalisation de l'invention, l'anneau est en matériau poreux, préférentiellement une mousse métallique, plus préférentiellement un mousse de nickel.

Préférentiellement, pour les trois modes de réalisation décrits précédemment, les segments de l'anneau sont en feuillard d'une épaisseur comprise entre 0.1 et 1 mm, préférentiellement entre 0.15 et 0.5 mm, plus préférentiellement encore entre 0.15 et 0.3 mm.

Préférentiellement, pour les trois modes de réalisation décrits précédemment, la virole comprend une couche de colle disposée entre le support et l'anneau, et assurant leur liaison.

Préférentiellement, la couche de colle est en contact direct avec la surface du support et avec la surface correspondante de l'anneau.

Préférentiellement, pour les trois modes de réalisation décrits précédemment, la couche d'abradable comprend un abradable avec un constituant métallique projeté par plasma.

Préférentiellement, pour les trois modes de réalisation décrits précédemment, la couche d'abradable comprend un abradable du type AI-Si-Polyester projeté par plasma.

Préférentiellement, la couche d'abradable est appliquée directement sur l'anneau, préférentiellement par projection.

Selon un encore autre mode avantageux de l'invention, le support constitue une section structurelle du carter d'un compresseur de la turbomachine, ladite section correspondant préférentiellement à au moins une rangée d'aubes statoriques et une rangée d'aubes rotoriques dudit compresseur.

L'invention consiste également en un compresseur de turbomachine axiale comprenant un rotor équipé d'aubes dites rotoriques, un carter équipé d'aubes dites statoriques, remarquable en ce que ledit carter comprend une virole ou un assemblage avec au moins une des viroles telle que définie ci-avant, ladite virole étant au niveau dudit carter avec une couche d'abradable assurant une étanchéité avec les extrémités supérieures desdites aubes rotoriques .

L'invention consiste également en un procédé de fabrication d'une virole de turbomachine axiale, préférentiellement de compresseur de turbomachine axiale, comprenant les étapes suivantes :
a) mise à disposition d'un élément structurel assurant la rigidité de la turbomachine et formant un support en matériau composite à matrice organique de forme généralement annulaire ou cylindrique avec une surface interne généralement circulaire ;
b) application d'un anneau métallique sur ledit support, ledit anneau ayant une surface interne et une surface externe opposée à ladite surface interne et appliquée préférentiellement par collage sur la surface interne dudit support ;
c) application d'une couche d'abradable sur la surface interne dudit anneau.

Selon un mode avantageux de l'invention, l'étape c) est réalisée par projection plasma, l'abradable étant préférentiellement du type Al-Si-Polyester.

Selon un autre mode avantageux de l'invention, le procédé comprend une étape réalisée préalablement à l'étape c) consistant à préparer la surface de l'anneau anneau opposée à sa surface disposée sur le support soit par une opération de sablage ou par une attaque chimique.

On peut également envisager un autre procédé de réalisation de la présente invention. L'anneau peut être constitué de plusieurs secteurs qui peuvent être intégrés pendant la fabrication de la virole extérieure en composite en comoulage.

### Brève description des dessins

La figure 1 est une vue en coupe schématique d'une turbomachine axiale à double flux, du type moteur d'avion dont le compresseur basse-pression et/ou le compresseur haute-pression est susceptible d'être équipé de virole externe et/ou interne conforme à l'invention.
La figure 2 est une vue en coupe partielle du compresseur basse-pression de la turbomachine de la figure 2, le compresseur basse-pression étant équipé de viroles conformes à l'invention.
La figure 3 est une vue en perspective d'un secteur d'étage de stator de compresseur, comprenant une virole conforme à l'invention.
La figure 4 est une vue en coupe de la virole de la figure 4.
La figure 5 est une vue fortement agrandie de la virole de la figure 4, illustrant le rôle d'une des perforations de l'anneau métallique.

### Description des modes de réalisation

Dans la description qui va suivre, les termes « interne » et « externe » utilisés pour qualifier les surfaces du support et de l'anneau se rapportent à l'enveloppe formée par le support et/ou l'anneau, « interne » signifiant alors à l'intérieur de cette enveloppe, et « externe » signifiant alors à l'extérieur de cette enveloppe.

Il est à noter que le qualificatif « externe » pour la virole se rapporte par contre à la veine fluide généralement annulaire, « virole externe » désignant une virole du côté de la limite externe ou extérieure de la veine fluide et « virole interne » désignant une virole du côté de la limite interne ou intérieure de la veine fluide.

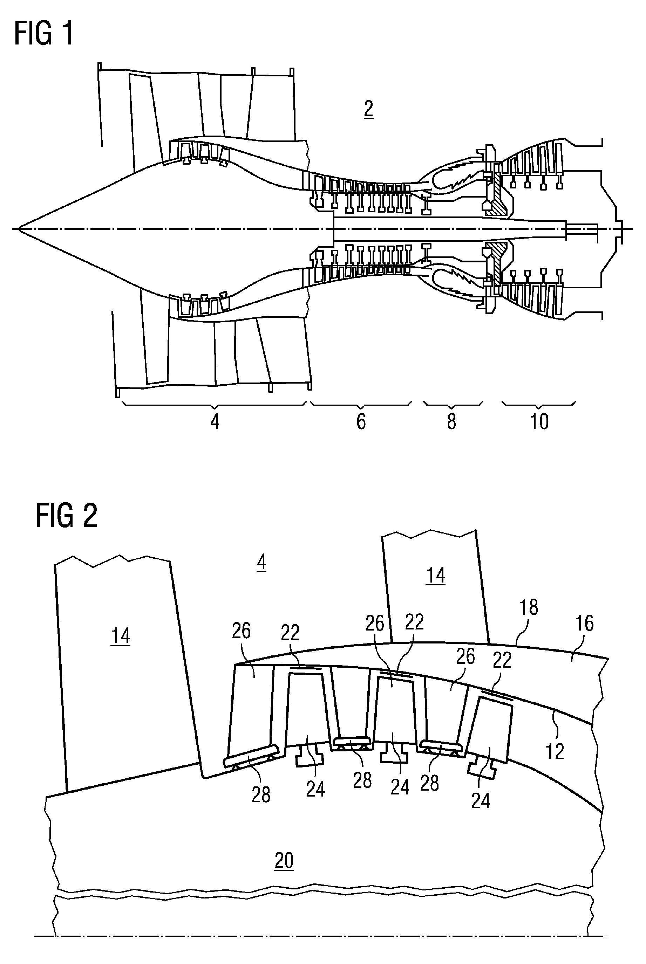

La turbomachine axiale 2 illustrée à la figure 1 est une machine à double flux du type moteur à réaction pour avion. Elle comprend, d'amont en aval, un compresseur basse-pression 4, un compresseur haute-pression 6, une chambre de combustion 8 et une turbine 10. Les compresseurs basse-pression et haute-pression ne sont pas soumis aux hautes températures auxquelles la turbine est soumise. Il est donc possible d'utiliser des matériaux composites à matrice organique pour la réalisation de différents éléments de ces compresseurs comme par exemple la virole externe du stator.

Le compresseur basse-pression 4 de la figure 1 est illustré à la figure 2. On peut y observer le rotor 20 portant plusieurs rangées d'aubes dite rotoriques 24, le stator formé d'un carter 12 et d'une paroi 16 délimitant le flux d'air secondaire. Le carter 12 supporte une série d'aubes fixes 26 dites statoriques. Chaque rangée circonférentielle d'aubes statoriques forme un étage redresseur. Chaque rangée circonférentielle d'aubes statoriques forme avec une rangée circonférentielle d'aubes rotoriques un étage de compression ayant pour rôle d'augmenter la pression du fluide, en l'occurrence de l'air, le traversant. Etant donné le gradient de pression selon une direction généralement axiale, il est nécessaire de prévoir des moyens d'étanchéité entre les parties tournantes et la partie fixe le long de la veine fluide. Une couche d'abradable 22 est disposée en regard des extrémités extérieures de chaque rangée d'aubes rotoriques 24 afin d'assurer une étanchéité avec possibilité de contact.

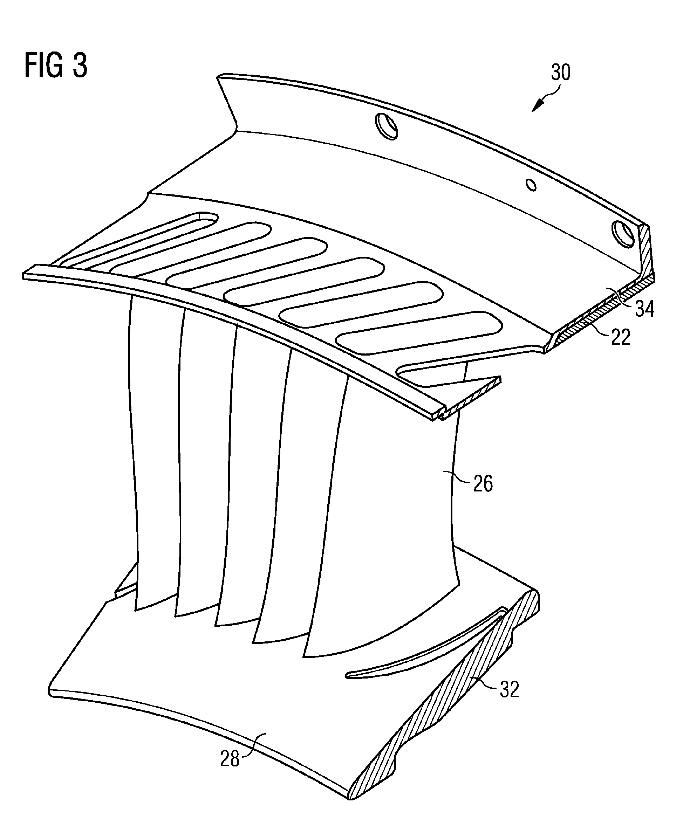

La figure 3 illustre un tronçon 30 du carter de stator de la figure 2, le tronçon 30 correspondant à un étage de compression. En effet, ce tronçon de carter comporte une paroi 34 généralement cylindrique portant une rangée d'aubes statoriques 26 et une couche d'abradable 22 directement en aval des aubes statoriques 26 de manière à venir en regard des extrémités extérieures des aubes rotoriques directement adjacentes en aval.

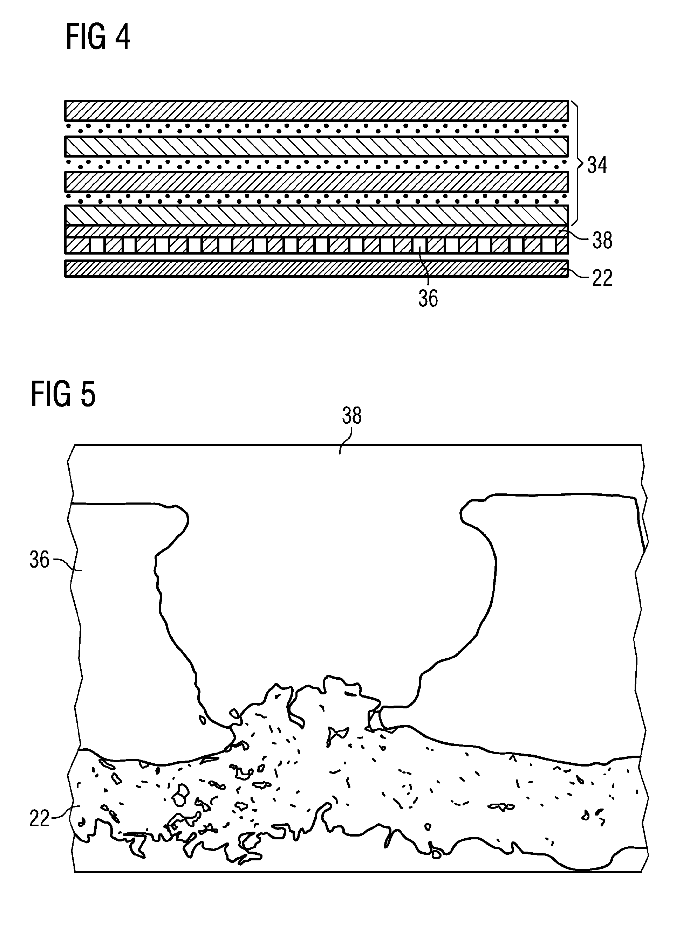

La constitution de la paroi formant support et de la couche d'abradable sur cette paroi est illustrée à la figure 4. Il s'agit d'une vue en coupe. Il est à noter que cette construction est illustrée et décrite en relation avec la paroi 34 du carter formant une virole dite externe.

La paroi 34 formant le support de la virole est en matériau composite à matrice organique, comme par exemple des fibres de carbone enrobées d'une résine époxy selon la méthode RTM (« resin transfer moulding ») consistant à injecter sous pression la résine dans un moule fermé contenant un renfort compacté ou préformé. Lorsque la résine est polymérisée, le moule peut être ouvert et le composite retiré.

Un feuillard métallique 36 en forme d'anneau généralement cylindrique est appliqué contre la surface interne de la paroi 34 au moyen d'une couche de colle 38. Le feuillard peut être constitué d'une seule pièce formant un anneau complet ou de plusieurs segments. Le feuillard est perforé afin de permettre un accrochage mécanique optimisé de la colle. Les perforations permettent également un dégazage de l'adhésif après application, tout en apportant un avantage de malléabilité pour la mise en place. Cette configuration de matériau permet également de limiter la propagation des criques.

L'adhésif ou colle peut être par exemple à base d'époxy. Celui-ci peut être appliqué sous forme de film par exemple sur la face externe du feuillard métallique.

L'abradable 22 est appliqué sur la surface interne du feuillard métallique 36. Un abradable est un matériau présentant des caractéristiques d'abradabilité garantissant l'intégrité des aubes rotoriques lors de contact avec le matériau. Plus particulièrement un abradable peut être constitué de 3 éléments principaux:
- une phase structurelle qui permet de garantir la rigidité du revêtement et la résistance à la corrosion,
- une phase non structurelle ayant pour rôle de lubrifier le contact au passage de l'extrémité de la pale (phase appelée parfois lubrifiant solide),
- des porosités qui permettent le détachement aisé des particules de revêtement lors du contact.

Il consiste dans ce mode de réalisation essentiellement en un matériau hétérogène avec une phase métallique, déposé par projection thermique, plus particulièrement par projection plasma. Ce matériau peut être du type AI-Si-Polyester.

La technique par projection plasma est une technique de fabrication de la métallurgie des poudres, elle est utilisée pour donner un grand nombre de matériaux à forte abradabilité. Le plasma est généré par des électrodes concentriques soumises à une forte différence de potentiel électrique et un fort courant continu, qui ionisent un gaz inerte (azote, argon, hélium) et lui font atteindre une forte pression et une température extrêmement élevée (plus de 16 000°C pour un courant de 1000 A). Un flux de poudre est ensuite injecté dans le conduit et entraîné par le plasma. Cette technique permet de faire entrer en fusion n'importe quel métal, même le plus réfractaire étant donné les températures atteintes.

Afin d'assurer un accrochage optimal de l'abradable, un traitement par sablage de la surface interne du feuillard métallique est recommandé.

Les perforations du feuillard sont idéalement réparties sur toute sa surface de manière à assurer un accrochage homogène. Le feuillard présente une épaisseur assez fine, par exemple comprise entre 0.1 et 1 mm, préférentiellement de l'ordre de 0.2 mm. Il peut être en acier inoxydable comme de l'inox 316L. Il peut également être en titane ou encore en invar® (un alliage de fer (64 %) et de nickel (36 %) avec un peu de carbone et de chrome, dont la propriété principale est d'avoir un coefficient de dilatation très faible). Alternativement, il peut être un treillis métallique ou encore une mousse métallique comme une mousse de nickel ou de nickel-chrome.

De manière préférentielle, la surface externe du feuillard métallique, c'est-à-dire la surface qui va être collée à la paroi structurelle composite de la virole, peut être sablée avant application. Cette opération de sable a pour effet de partiellement refermer les perforations, ce qui permet un accrochage mécanique plus fort. Cet effet est illustré à la figure 5 qui est une vue très agrandie d'une perforation de l'anneau, de la colle et de l'abradable. Elle montre bien la forme en champignon de la colle 38 dans une des perforations du feuillard 36. Cet effet est également vrai pour l'autre face du feuillard 36, à savoir celle qui va recevoir la couche d'abradable 22.

## Revendications

1. Virole de turbomachine axiale, comprenant:
un élément structurel assurant la rigidité de la turbomachine et formant un support (34) de forme généralement annulaire ou cylindrique avec une surface interne généralement circulaire;
un anneau (36) avec une surface interne et une surface externe opposée à ladite surface interne et disposée sur la surface interne dudit support (34) ;
une couche de matériau abradable (22) disposée sur la surface interne dudit anneau (36) ;
**caractérisée en ce que**
ledit support (34) est en matériau composite à matrice organique : et
ledit anneau (36) est en matériau métallique.

2. Virole de turbomachine axiale selon la revendication précédente, **caractérisée en ce que** l'anneau (36) comprend une série de perforations réparties sur sa surface, les perforations ayant préférentiellement un diamètre inférieur ou égal à 1 mm, plus préférentiellement encore inférieur ou égal à 0.6 mm.

3. Virole de turbomachine axiale selon la revendication 1, **caractérisée en ce que** l'anneau (36) est constitué d'un treillis métallique.

4. Virole de turbomachine axiale selon l'une des revendications précédentes, **caractérisée en ce que** le matériau métallique de l'anneau (36) est compris parmi les matériaux suivants : acier inoxydable, titane, alliage de fer et nickel, invar®

5. Virole de turbomachine axiale selon la revendication 1, **caractérisée en ce que** l'anneau (36) est en matériau poreux, préférentiellement une mousse métallique, plus préférentiellement une mousse de nickel.

6. Virole de turbomachine axiale selon l'une des revendications précédentes, **caractérisée en ce que** l'anneau (36) est en feuillard d'une épaisseur comprise entre 0.1 et 1 mm, préférentiellement entre 0.15 et 0.5 mm, plus préférentiellement encore entre 0.15 et 0.3 mm.

7. Virole de turbomachine axiale selon l'une des revendications précédentes, **caractérisée en ce que** l'anneau (36) est constitué de plusieurs segments.

8. Virole de turbomachine axiale selon l'une des revendications précédentes, **caractérisée en ce qu'**elle comprend une couche de colle (38) disposée entre le support (34) et l'anneau (36), et assurant leur liaison.

9. Virole de turbomachine axiale selon la revendication précédente, **caractérisée en ce que** la couche de colle (38) est en contact direct avec la surface interne du support (34) et avec la surface correspondante de l'anneau (36).

10. Virole de turbomachine axiale selon l'une des revendications précédentes, **caractérisée en ce que** la couche d'abradable (22) comprend un abradable du type Al-Si-Polyester projeté par plasma.

11. Virole de turbomachine axiale selon l'une des revendications précédentes, **caractérisée en ce que** le support (34) constitue une section structurelle (30) du carter (12) d'un compresseur (4, 6) de la turbomachine, ladite section correspondant préférentiellement à au moins une rangée d'aubes statoriques et une rangée d'aubes rotoriques dudit compresseur.

12. Compresseur (4, 6) de turbomachine axiale comprenant un rotor (20) équipé d'aubes dites rotoriques (24), d'un carter (12) équipé d'aubes dites statoriques (26) **caractérisé en ce que** ledit carter (12) comprend une virole selon l'une des revendications précédentes, ladite virole étant au niveau du carter (12) avec une couche d'abradable (22) assurant une étanchéité avec les extrémités supérieures desdites aubes rotoriques (24).

13. Procédé de fabrication d'une virole de turbomachine axiale, préférentiellement de compresseur de turbomachine axiale, **caractérisé par** les étapes suivantes:
a) mise à disposition d'un élément structurel assurant la rigidité de la turbomachine et formant un support (34) en matériau composite à matrice organique de forme généralement annulaire ou cylindrique avec une surface interne généralement circulaire;
b) application d'un anneau métallique (36) sur ledit support (34), ledit anneau ayant une surface interne et une surface externe opposée à ladite surface interne et appliquée préférentiellement par collage sur la surface interne dudit support (34) ;
c) application d'une couche d'abradable (22) sur la surface interne dudit anneau.

14. Procédé de fabrication d'une virole de turbomachine axiale selon la revendication précédente, **caractérisé en ce que** l'étape c) est réalisée par projection plasma, l'abradable étant préférentiellement du type Al-Si-Polyester.

15. Procédé de fabrication d'une virole de turbomachine axiale selon la revendication précédente, **caractérisé par** une étape réalisée préalablement à l'étape c) consistant à préparer la surface interne de l'anneau (36), par une opération de sablage ou par une attaque chimique.

## Patentansprüche

1. Gehäusering einer axialen Turbomaschine, umfassend:
ein strukturelles Element, das die Steifigkeit der Turbomaschine sicherstellt und einen Träger (34) von generell ringförmiger oder zylindrischer Form mit einer generell kreisförmigen Innenfläche bildet;
einen Ring (36) mit einer Innenfläche und einer Außenfläche entgegengesetzt zu der Innenfläche und an der Innenfläche des Trägers (34) angebracht;
eine an der Innenfläche des Rings (36) befestigte Schicht aus abtragbarem Material (22);
**dadurch gekennzeichnet, dass**
der Träger (34) aus Verbundwerkstoff mit einer organischen Matrix hergestellt ist; und der Ring (36) aus einem metallischen Werkstoff hergestellt ist.

2. Gehäusering einer axialen Turbomaschine nach dem vorgenannten Anspruch, wobei der Ring (36) eine Serie von über seine Oberfläche verteilten Perforationen umfasst, wobei die Perforationen bevorzugt einen Durchmesser von kleiner oder gleich 1 mm, bevorzugter kleiner oder gleich 0,6 mm, aufweisen.

3. Gehäusering einer axialen Turbomaschine nach Anspruch 1, wobei der Ring (36) aus einem Drahtgeflecht besteht.

4. Gehäusering einer axialen Turbomaschine nach einem der vorgenannten Ansprüche, wobei der metallische Werkstoff des Rings (36) aus den folgenden Materialien besteht: Edelstahl, Titan, Nickel-Eisen-Legierung, Invar®,

5. Gehäusering einer axialen Turbomaschine nach Anspruch 1, wobei der Ring (36) aus einem porösen Material, bevorzugt metallischem Schaum, bevorzugter Nickelschaum, hergestellt ist.

6. Gehäusering einer axialen Turbomaschine nach einem der vorgenannten Ansprüche, wobei der Ring (36) aus einem Streifen mit einer Dicke von zwischen 0,1 mm und 1 mm, bevorzugt zwischen 0,15 mm und 0,5 mm, bevorzugter zwischen 0,15 mm und 0,3 mm, hergestellt ist.

7. Gehäusering einer axialen Turbomaschine nach einem der vorgenannten Ansprüche, wobei der Ring (36) aus mehreren Segmenten hergestellt ist.

8. Gehäusering einer axialen Turbomaschine nach einem der vorgenannten Ansprüche, wobei er eine Klebstoffschicht (38) umfasst, die zwischen dem Träger (34) und dem Ring (36) angeordnet ist und deren Verbindung sicherstellt.

9. Gehäusering einer axialen Turbomaschine nach einem der vorgenannten Ansprüche, wobei die Klebstoffschicht (38) in direktem Kontakt mit der Träger-Innenfläche (34) und der entsprechenden Oberfläche des Rings (36) ist.

10. Gehäusering einer axialen Turbomaschine nach einem der vorgenannten Ansprüche, wobei die abtragbare Schicht (22) ein unter Verwendung von Plasma aufgesprühtes, abtragbares AlSi-Polyester-Material umfasst.

11. Gehäusering einer axialen Turbomaschine nach einem der vorgenannten Ansprüche, wobei der Träger (34) einen strukturellen Teil (30) des Gehäuses (12) eines Kompressors (4, 6) der Turbomaschine darstellt, wobei besagter Abschnitt bevorzugt mindestens einer Reihe von Statorschaufeln und einer Reihe von Rotorschaufeln dieses Kompressors entspricht.

12. Kompressor (4, 6) einer axialen Turbomaschine, umfassend einen Rotor (20), der mit Schaufeln ausgerüstet ist, genannt eine Rotorschaufelreihe (24), ein Gehäuse (12), das mit Schaufeln ausgerüstet ist, genannt eine Statorschaufelreihe (26), wobei das Gehäuse (12) einen Gehäusering nach einem der vorgenannten Ansprüche umfasst, wobei dieser Gehäusering Teil des Gehäuses (12) ist, mit einer abtragbaren Schicht (22), die eine Dichtung mit den Spitzen der Rotorschaufel (24) sicherstellt.

13. Verfahren zur Herstellung eines Gehäuserings einer axialen Turbomaschine, bevorzugt eines Kompressors einer axialen Turbomaschine, umfassend die folgenden Schritte:
a) Bereitstellen eines strukturellen Elements, das die Steifigkeit der Turbomaschine sicherstellt und einen Träger (34) aus einem Verbundwerkstoff mit einer organischen Matrix, generell ringförmig oder zylindrisch mit einer generell kreisförmigen Innenfläche, bildet;
b) Anbringen eines Metallrings (36) an dem Träger (34), wobei dieser Ring eine Innenfläche und einer Außenfläche entgegengesetzt zu der Innenfläche und bevorzugt mittels Kleben an der Innenfläche des Trägers (34) angebracht aufweist;
c) Anbringen einer abtragbaren Schicht (22) an der Innenfläche dieses Rings.

14. Verfahren zur Herstellung eines Gehäuserings einer axialen Turbomaschine nach dem vorgenannten Anspruch, wobei Schritt c) durch Plasmasprühen durchgeführt wird, wobei das abtragbare Material bevorzugt vom AlSi-Polyester-Typ ist.

15. Verfahren zur Herstellung eines Gehäuserings einer axialen Turbomaschine nach dem vorgenannten Anspruch, wobei ein Schritt der Vorbereitung der Innenfläche des Rings (36) entweder durch Sandstrahlen oder chemisches Ätzen vorangehend an Schritt c) ausgeführt wird.

## Claims

1. Shell of an axial turbomachine, comprising:
a structural element providing rigidity of the turbomachine and forming a support (34) of a generally annular or cylindrical shape with a generally circular inner surface;
a ring (36) with an inner surface and an outer surface opposite to the said inner surface and attached to the inner surface of the said support (34);
a layer of abradable material (22) attached to the inner surface of the said ring (36);
**characterized in that**
the said support (34) is made of composite material with an organic matrix; and
the said ring (36) is made of a metallic material.

2. Shell of an axial turbomachine according to the preceding claim, wherein the ring (36) comprises a series of perforations distributed over its surface, the perforations preferably having a diameter less than or equal to 1 mm, more preferably less than or equal to 0.6 mm.

3. Shell of an axial turbomachine according to Claim 1, wherein the ring (36) consists of a wire mesh.

4. Shell of an axial turbomachine according to one of the preceding claims, wherein the metallic material of the ring (36) is comprised among the following materials: stainless steel, titanium, nickel-iron alloy, Invar®.

5. Shell of an axial turbomachine according to Claim 1, wherein the ring (36) is made of a porous material, preferably metallic foam, more preferably nickel foam.

6. Shell of an axial turbomachine according to one of the preceding claims, wherein the ring (36) is made of a strip with a thickness of between 0.1 mm and 1 mm, preferably between 0.15 mm and 0.5 mm, more preferably between 0.15 mm and 0.3 mm.

7. Shell of an axial turbomachine according to one of the preceding claims, wherein the ring (36) is made of several segments.

8. Shell of an axial turbomachine according to one of the preceding claims, wherein it comprises an adhesive layer (38) placed between the support (34) and the ring (36), ensuring their bonding.

9. Shell of an axial turbomachine according to the preceding claim, wherein the adhesive layer (38) is in direct contact with the internal support surface (34) and the corresponding surface of the ring (36).

10. Shell of an axial turbomachine according to one of the preceding claims, wherein the abradable layer (22) comprises an AlSi polyester abradable material, sprayed on using plasma.

11. Shell of an axial turbomachine according to one of the preceding claims, wherein the support (34) constitutes a structural part (30) of the housing (12) of a compressor (4, 6) of the turbomachine, the said section preferably corresponding to at least one row of stator blades and one row of rotor blades of the said compressor.

12. Compressor (4, 6) of an axial turbomachine comprising a rotor (20) fitted with blades called a rotor blade row (24), a housing (12) fitted with blades called a stator blade row (26), wherein the said housing (12) comprises a shell according to one of the preceding claims, the said shell being part of the housing (12) with an abradable layer (22) providing a seal with the tips of the said rotor blades (24)

13. A method of manufacturing a shell of an axial turbomachine, preferably an axial turbomachine compressor, comprising the following steps:
a) providing a structural element providing rigidity of the turbomachine and forming a support (34) of a composite material with an organic matrix generally ring-shaped or cylindrical with a generally circular inner surface;
b) fixing a metal ring (36) on the said support (34), the said ring having an inner surface and an outer surface opposite to the said inner surface and preferably fixed by gluing on the inner surface of the said support (34);
c) applying an abradable layer (22) on the inner surface of the said ring.

14. The method of manufacturing a shell of an axial turbomachine in accordance with the preceding claim, wherein step c) is performed by plasma spraying, the abradable material being preferably of the AlSi polyester type.

15. The method of manufacturing a shell of an axial turbomachine according to the preceding claim, wherein a step of preparing the inner surface of the ring (36) either by sandblasting or chemical etching is carried out prior to step c).
